# EUROPÄISCHE PATENTANMELDUNG

(11) **EP 3 567 557 A1**
(43) Veröffentlichungstag der Anmeldung: **13.11.2019**
(21) Anmeldenummer: 19172786.6
(22) Anmeldetag: 06.05.2019
(51) Int. Cl.: G07C 9/00, E05B 67/00

(54) **SCHLIESSSYSTEM**

(30) Priorität: 11.05.2018 DE 102018111290
(71) Anmelder: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(57) **Zusammenfassung**

Die Erfindung betrifft ein Schließsystem mit einem elektrisch betätigbaren mobilen Schloss und einem Aktivierungsmittel, welches einen dem Schloss zugeordneten virtuellen Schlüssel umfasst und welches dazu dient, bei einer Interaktion mit einem ersten mobilen Endgerät, den virtuellen Schlüssel auf das erste mobile Endgerät zu übertragen und in diesem zu speichern, wobei der virtuelle Schlüssel dazu dient, eine verschlüsselte Datenkommunikationsverbindung zwischen dem ersten mobilen Endgerät und dem Schloss aufzubauen, um das erste mobile Endgerät mit dem Schloss zu koppeln und das erste mobile Endgerät zur Betätigung des Schlosses zu berechtigen. Des Weiteren befasst sich die Erfindung mit einem Verfahren zur Kopplung eines mobilen Endgeräts mit einem elektrisch betätigbaren mobilen Schloss zum Zweck der Betätigung des Schlosses mittels des mobilen Endgeräts.

## Beschreibung

Die vorliegende Erfindung betrifft ein Schließsystem mit einem elektrisch betätigbaren mobilen Schloss und einem dem Schloss zugeordneten virtuellen Schlüssel, welcher eine Betätigung, d.h. ein Öffnen oder Schließen, des Schlosses mittels eines mobilen Endgeräts, wie zum Beispiel einem Smartphone, ermöglicht.

Damit das Schloss mittels des mobilen Endgeräts betätigt werden kann, bedarf es einer Kopplung von mobilem Endgerät und Schloss, so dass eine Kommunikation bzw. ein Datenaustausch zwischen mobilen Endgerät und Schloss möglich ist. Um das Schloss vor dem Zugriff einer unbefugten Person zu schützen ist es erforderlich, dass der Datenaustausch und insbesondere die Kopplung von mobilen Endgerät und Schloss gesichert sind.

Es ist daher eine Aufgabe der Erfindung, ein Schließsystem zu schaffen, welches eine zugriffsgeschützte Kopplung von mobilem Endgerät und Schloss ermöglicht.

Die Aufgabe wird durch ein Schließsystem mit den Merkmalen des Anspruchs 1 und durch ein Verfahren mit den Merkmalen des Anspruchs 11 gelöst. Das erfindungsgemäße Schließsystem umfasst ein elektrisch betätigbares mobiles Schloss und ein Aktivierungsmittel, welches einen dem Schloss zugeordneten virtuellen Schlüssel umfasst und welches dazu dient, bei einer Interaktion mit einem ersten mobilen Endgerät, den virtuellen Schlüssel auf das erste mobile Endgerät zu übertragen und in diesem zu speichern, wobei der virtuelle Schlüssel dazu dient, eine verschlüsselte Datenkommunikationsverbindung zwischen dem ersten mobilen Endgerät und dem Schloss aufzubauen, um das erste mobile Endgerät mit dem Schloss zu koppeln und dadurch das erste mobile Endgerät zur Betätigung des Schlosses zu berechtigen.

Das erfindungsgemäße Verfahren dient zur Kopplung eines mobilen Endgeräts mit einem elektrisch betätigbaren mobilen Schloss zum Zweck der Betätigung des Schlosses mittels des mobilen Endgeräts und umfasst die folgenden Schritte:
- Bereitstellen eines elektrisch betätigbaren mobilen Schlosses zusammen mit einem Aktivierungsmittel, welches einen dem Schloss zugeordneten virtuellen Schlüssel umfasst;
- Übertragen des virtuellen Schlüssels auf das mobile Endgerät und Speichern des virtuellen Schlüssels in dem mobilen Endgerät infolge einer Interaktion des mobilen Endgeräts mit dem Aktivierungsmittel;
- Aufbauen einer verschlüsselten Datenkommunikation zwischen dem mobilen Endgerät und dem Schloss unter Verwendung des virtuellen Schlüssels; und
- Koppeln des mobilen Endgeräts mit dem Schloss und dadurch Berechtigen des mobilen Endgeräts zur Betätigung des Schlosses.

Der Erfindung liegt der allgemeine Gedanke zugrunde, dass sich eine möglichst sichere Kopplung zwischen einem mobilen Endgerät und einem mobilen Schloss durch ein Aktivierungsmittel erreichen lässt, welches einen dem Schloss zugeordneten virtuellen Schlüssel umfasst und welches dazu dient, bei einer Interaktion mit dem mobilen Endgerät, den virtuellen Schlüssel auf das mobile Endgerät zu übertragen, wo der virtuelle Schlüssel gespeichert wird. Der virtuelle Schlüssel dient bei einer anschließenden Kopplung von mobilem Endgerät und Schloss dazu, eine verschlüsselte Datenkommunikationsverbindung zwischen dem mobilen Endgerät und dem Schloss aufzubauen, so dass das mobile Endgerät nach einer erfolgreichen Kopplung mit dem Schloss dazu berechtigt ist, das Schloss zu betätigen.

Durch die verschlüsselte Datenkommunikationsverbindung zwischen dem mobilen Endgerät und dem Schloss ergibt sich der Vorteil, dass der Datenaustausch zwischen dem mobilen Endgerät und dem Schloss bereits während deren Kopplung vor dem Zugriff durch eine unberechtigte Person geschützt ist. Darüber hinaus lässt sich auch ein Betätigungsvorgang durch die verschlüsselte Datenkommunikationsverbindung vor einem unberechtigten Zugriff schützen. Unter einer Betätigung des Schlosses ist dabei jede mögliche Art der Bedienung des Schlosses durch das mobile Endgerät zu verstehen. Insbesondere handelt es sich bei der Betätigung des Schlosses um ein Öffnen oder Schließen desselben. Dabei übt das mobile Endgerät gewissermaßen die Funktion eines konventionellen Schlüssels aus.

Neben einer zugriffsgeschützten Datenkommunikation bietet das erfindungsgemäße Schließsystem bzw. das erfindungsgemäße Verfahren außerdem den Vorteil, dass sich die verschlüsselte Datenkommunikationsverbindung zwischen dem mobilen Endgerät und dem Schloss und somit auch die Kopplung von mobilen Endgerät und Schloss auf besonders einfache Weise bewerkstelligen lässt, da zur Übertragung des Schlüssels auf das mobile Endgerät lediglich eine, insbesondere einmalige, Interaktion des mobilen Endgeräts mit dem Aktivierungsmittel nötig ist. Insbesondere kann durch die Interaktion das Herunterladen einer Implementierungssoftware, z.B. einer App, auf das mobile Endgerät veranlasst werden, welche sämtliche weitere Schritte, d.h. Aufbau der Datenkommunikationsverbindung, Kopplung von mobilen Endgerät und Schloss sowie Betätigungsberechtigung des mobilen Endgeräts automatisch durchführt.

Ein mobiles Schloss kann jedes beliebige Schloss sein, welches von einem Benutzer mitgenommen werden kann, wie zum Beispiel ein Bügelschloss oder ein Hangschloss. Unter einem mobilen Schloss ist aber auch ein an einem Fahrzeug, insbesondere einem zweirädrigen Fahrzeug, angebrachtes oder anbringbares Schloss zu verstehen, wie zum Beispiel ein Rahmenschloss, ein Bremsscheibenschloss, ein Batteriefachschloss und dergleichen.

Grundsätzlich kann das mobile Endgerät nicht nur ein Smartphone, sondern auch ein Tablett-Computer, eine Smartwatch oder dergleichen sein.

Vorteilhafte Ausgestaltungen der Erfindung sind den Unteransprüchen, der Beschreibung und den beigefügten Zeichnungen zu entnehmen.

Vorzugsweise erfolgt die Kommunikation zwischen dem mobilen Endgerät und dem Schloss mittels einer drahtlosen Kommunikationsdatenverbindung. Dabei ist es von Vorteil, wenn das mobile Endgerät und das Schloss zur Übertragung von Daten mittels der drahtlosen Kommunikationsdatenverbindung jeweils eine Sende/Empfangseinheit aufweisen. Als Datenübertragungsstandard kann beispielsweise Bluetooth in Betracht kommen.

Die Interaktion, insbesondere die erstmalige Interaktion, des ersten mobilen Endgeräts mit dem Aktivierungsmittel kann eine Vergabe von Administrationsrechten an das erste mobile Endgerät bewirken. Dabei können die Administrationsrechte unter anderem die Berechtigung umfassen, den virtuellen Schlüssel von dem ersten mobilen Endgerät auf ein weiteres, zweites mobiles Endgerät zu übertragen. Das zweite mobile Endgerät kann beispielsweise einer dem Benutzer des ersten mobilen Endgeräts vertrauten Person zugeordnet sein, wie zum Beispiel einem Familienmitglied, einer Freundin oder einem Freund.

Es versteht sich, dass der virtuelle Schlüssel von dem ersten mobilen Endgerät nicht nur auf ein weiteres mobiles Endgerät (zweites mobiles Endgerät) sondern auch auf mehrere weitere mobile Endgeräte (zweite mobile Endgeräte) übertragen werden kann. Bei jeder Übertragung des virtuellen Schlüssels wird dieser gewissermaßen virtuell vervielfältigt.

Grundsätzlich können neben dem virtuellen Schlüssel auch Administrationsrechte oder Teilberechtigungen von dem ersten mobilen Endgerät an das zweite mobile Endgerät übertragen werden. Es versteht sich, dass ein Benutzer, dessen mobiles Endgerät mit Administrationsrechten versehen ist, den virtuellen Schlüssel, die Administrationsrechte und/oder die Teilberechtigungen von dem weiteren mobilen Endgerät wieder entziehen kann.

Um auch das zweite mobile Endgerät gesichert mit dem Schloss zu koppeln, kann eine Übertragung des virtuellen Schlüssels an das zweite mobile Endgerät den Aufbau einer verschlüsselten Datenkommunikationsverbindung zwischen dem zweiten mobilen Endgerät und dem Schloss ermöglichen, wodurch das zweite mobile Endgerät mit dem Schloss gekoppelt und zur Betätigung des Schlosses berechtigt wird. Dabei kann der Aufbau der verschlüsselten Datenkommunikationsverbindung sofort nach der Übertragung des virtuellen Schlüssels erfolgen oder wenn sich ein Benutzer mit dem zweiten mobilen Endgerät dem Schloss nähert.

Sollte ein Benutzer sein bereits zur Betätigung des Schlosses berechtigtes mobiles Endgerät, z.B. das erste mobile Endgerät, verloren haben oder sollte dieses mobile Endgerät widerrechtlich entwendet worden sein, so kann die Interaktion eines dritten mobilen Endgeräts mit dem Aktivierungsmittel eine neue Vergabe von Administrationsrechten an das dritte mobile Endgerät bewirken. Durch die neu vergebenen Administrationsrechte wird das das erste mobile Endgerät ersetzende dritte mobile Endgerät vorteilhafterweise dazu berechtigt, früher vergebene Administrationsrechte und/oder früher vergebene Berechtigungen zur Betätigung des mobilen Schlosses zu entziehen, so dass das Schloss von nun an nicht mehr mittels des verlorenen oder entwendeten ersten mobilen Endgeräts betätigt werden kann. Auch können die neu vergebenen Administrationsrechte dazu berechtigen, an weitere zweite mobile Endgeräte übertragene virtuelle Schlüssel und/oder Administrationsrechte und/oder Teilberechtigungen zu entziehen. Der Entzug von virtuellen Schlüsseln und/oder Administrationsrechten und/oder Teilberechtigungen kann automatisch oder auf Veranlassung des Benutzers des dritten mobilen Endgeräts erfolgen.

Die verschlüsselte Datenkommunikationsverbindung entsteht, indem die Daten von einem der beiden Kommunikationspartner, z.B. dem mobilen Endgerät oder Schloss, verschlüsselt und von dem anderen Kommunikationspartner, z.B. dem Schloss oder mobilen Endgerät, entschlüsselt werden. Hierfür ist es von Vorteil, wenn beide Kommunikationspartner jeweils denselben Schlüssel besitzen. Durch die Interaktion des mobilen Endgeräts mit dem Aktivierungsmittel wird der dem Schloss zugeordnete virtuelle Schlüssel auf das mobile Endgerät übertragen und dort in einem geschützten Speicher abgelegt bzw. abgespeichert. Das Schloss kann ebenfalls einen Speicher umfassen, in welchem ein Abbild des virtuellen Schlüssels abgespeichert ist. Somit können sowohl das mobile Endgerät als auch das Schloss jeweils übertragene Daten ver- bzw. entschlüsseln, wodurch eine verschlüsselte Kommunikation zwischen mobilem Endgerät und Schloss möglich ist.

Alternativ oder zusätzlich kann in dem Speicher des Schlosses ein dem oder jedem mobilen Endgerät jeweils zugeordneter Identifikator abgespeichert sein, wodurch das Schloss ein berechtigtes mobiles Endgerät identifizieren kann. Als Identifikator kann das Schloss jedem mobilen Endgerät eine eigene Identifikationsnummer zuordnen. Vorteilhafterweise wird die MAC-Adresse (Media-Access-Control-Adresse) des mobilen Endgeräts als Identifikator verwendet. Ferner kann in dem Speicher vermerkt sein, welches mobile Endgerät über Administrationsrechte verfügt.

Damit sich ein über Administrationsrechte verfügender Benutzer stets ein Bild von vergebenen Berechtigungen machen kann, ist es vorteilhaft, wenn die Administrationsrechte das Auslesen des Speichers des Schlosses umfassen. Die in dem Speicher gespeicherten Daten können dann beispielsweise auf einer Anzeigeeinheit des mobilen Endgeräts angezeigt werden.

Das Aktivierungsmittel kann einen, insbesondere von dem mobilen Endgerät auswertbaren, Code umfassen. Beispielsweise kann es sich bei dem Code um einen alphanumerischen Code handeln, welcher in das mobile Endgerät eingegeben werden kann. Es ist aber auch denkbar, dass der Code ein eindimensionaler oder zweidimensionaler Code ist, welcher von dem mobilen Endgerät ausgelesen werden kann, z.B. ein Strichcode oder QR-Code. Dabei ist es von Vorteil, wenn die Interaktion des mobilen Endgeräts mit dem Aktivierungsmittel mittels einer an dem mobilen Endgerät vorgesehenen optischen Einheit, insbesondere einer Kamera, erfolgt. Insbesondere kann der Code dann auf einfache Weise gescannt oder abfotografiert werden, wodurch die Interaktion des mobilen Endgeräts mit dem Aktivierungsmittel stattfindet und der Schlüssel auf das mobile Endgerät übertragen wird.

Das Aktivierungsmittel liegt dem Schloss vorteilhafterweise bei Auslieferung bei und ist zunächst unzugänglich, damit kein Unbefugter mit seinem mobilen Endgerät eine Interaktion mit dem Aktivierungsmittel bewirken kann. Umfasst das Aktivierungsmittel beispielsweise einen Code, so kann dieser von außen nicht sichtbar im Inneren einer Verpackung des Schlosses verwahrt sein. Nach dem Öffnen der Verpackung ist dann eine Interaktion des mobilen Endgeräts des berechtigten Benutzers mit dem Aktivierungsmittel möglich, wobei das Aktivierungsmittel für eine erneute Interaktion sicher zuhause verwahrt werden kann.

Sollte ein Benutzer über kein mobiles Endgerät verfügen, so kann grundsätzlich ein Handsender zur Betätigung des Schlosses vorgesehen sein, welcher bereits werkseitig mit dem Schloss gekoppelt ist.

Nachfolgend wird die Erfindung rein beispielhaft anhand einer möglichen Ausführungsform unter Bezugnahme auf die einzige Zeichnung beschrieben.

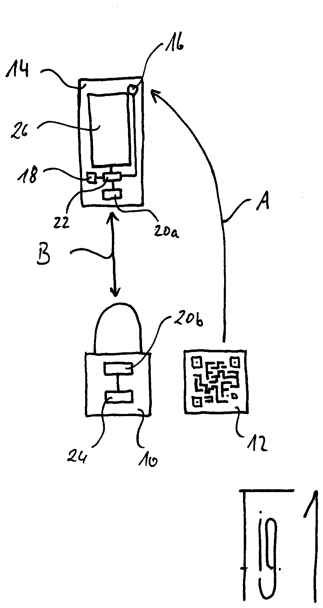

- Fig. 1: zeigt eine schematische Darstellung des erfindungsgemäßen Schließsystems.

Fig. 1 zeigt ein Schließsystem mit einem elektrisch betätigbaren mobilen Schloss 10, einem Aktivierungsmittel 12 und einem mobilen Endgerät 14. In dem in Fig. 1 dargestellten Ausführungsbeispiel sind das mobile Schloss 10 in Form eines Bügelschlosses, das Aktivierungsmittel 12 als zweidimensionaler Code und das mobile Endgerät 14 als Smartphone ausgebildet.

Das mobile Endgerät 14 umfasst eine optische Einheit 16 in Form einer Kamera, mittels welcher das mobile Endgerät 14 mit dem Aktivierungsmittel 12 interagieren kann, indem der zweidimensionale Code gescannt oder abfotografiert wird. Es versteht sich, dass eine Interaktion des mobilen Endgeräts 14 mit dem Aktivierungsmittel 12 dadurch erfolgen kann, dass das Aktivierungsmittel 12 ein alphanumerischer Code ist, welcher in das mobile Endgerät 14 eingegeben wird.

Das Aktivierungsmittel 12 enthält einen virtuellen Schlüssel, welcher dem Schloss 10 zugeordnet ist. Der virtuelle Schlüssel wird bei der Interaktion des mobilen Endgeräts 14 mit dem Aktivierungsmittel 12 auf das mobile Endgerät 14 übertragen (Pfeil A) und dort in einem Speicher 18 des mobilen Endgeräts 14 abgespeichert.

Der auf das mobile Endgerät 14 übertragene virtuelle Schlüssel dient dazu, eine verschlüsselte Datenkommunikation zwischen dem mobilen Endgerät 14 und dem Schloss 10 aufzubauen (Pfeil B), um das mobile Endgerät 14 mit dem Schloss 10 zu koppeln und das mobile Endgerät 14 zur Betätigung, d.h. Öffnen oder Schließen, des Schlosses 10 zu berechtigen. Die Datenkommunikation zwischen dem mobilen Endgerät 14 und dem Schloss 10 erfolgt dabei mittels einer drahtlosen Kommunikationsdatenverbindung. Hierfür weisen das mobile Endgerät 14 und das Schloss 10 jeweils eine Sende/Empfangseinheit 20a bzw. 20b auf.

Die Sende/Empfangseinheit 20a des mobilen Endgeräts 14 sowie die optische Einheit 16 und der Speicher 18 des mobilen Endgeräts 14 sind jeweils mit einer Steuereinheit 22 des mobilen Endgeräts 14 datentechnisch verbunden.

Damit eine verschlüsselte Datenkommunikation zwischen dem mobilen Endgerät 14 und dem Schloss 10 möglich ist, umfasst das Schloss 10 einen Speicher 24, in welchem ein Abbild des virtuellen Schlüssels abgespeichert ist. Hierdurch können die Daten von dem einen der beiden Kommunikationspartner, z.B. dem mobilen Endgerät 14 oder Schloss 10, verschlüsselt und von dem jeweils anderen Kommunikationspartner, z.B. dem Schloss 10 oder mobilen Endgerät 14, entschlüsselt werden.

Eine Interaktion des mobilen Endgeräts 14 bewirkt nicht nur, dass der virtuelle Schlüssel auf das mobile Endgerät 14 übertragen wird, wodurch das mobile Endgerät 14 letztendlich eine Berechtigung zur Betätigung des Schlosses 10 erlangt, sondern auch, dass dem mobilen Endgerät 14 Administrationsrechte verliehen werden.

Die Administrationsrechte befähigen den Benutzer des mobilen Endgeräts 14 den von dem mobilen Endgerät 14 (erstes mobiles Endgerät) an mindestens ein weiteres, in Fig. 1 nicht dargestelltes mobiles Endgerät (zweites mobiles Endgerät) zu übertragen. Wurde der virtuelle Schlüssel von dem ersten mobilen Endgerät 14 an das weitere, zweite mobile Endgerät übertragen, so ermöglicht auch der auf das zweite Endgerät übertragene virtuelle Schlüssel, eine verschlüsselte Datenkommunikationsverbindung zwischen dem zweiten mobilen Endgerät und dem Schloss 10 aufzubauen, um das zweite mobile Endgerät mit dem Schloss 10 zu koppeln und das zweite mobile Endgerät zur Betätigung des Schlosses 10 zu berechtigen. Grundsätzlich könnten auch Administrationsrechte von dem ersten mobilen Endgerät 14 an das zweite mobile Endgerät übertragen werden.

Damit das Schloss 10 erkennt, ob es sich bei einem mobilen Endgerät 14 tatsächlich um ein berechtigtes mobiles Endgerät 14 handelt, kann in dem Speicher 24 des Schlosses 10 nicht nur das Abbild des virtuellen Schlüssels abgespeichert sein, sondern auch ein dem oder jedem mobilen Endgerät jeweils zugeordneter Identifikator. Außerdem kann in dem Speicher 24 des Schlosses 10 auch abgespeichert sein, welches mobile Endgerät über Administrationsrechte verfügt. An dieser Stelle sei angemerkt, dass die Administrationsrechte dazu berechtigen, den Inhalt des Speichers 24 des Schlosses 10 auszulesen. Der ausgelesene Inhalt des Speichers 24 des Schlosses 10 kann dann mittels einer Anzeigeeinheit 26 des mobilen Endgeräts 14 angezeigt werden. Die Anzeigeeinheit 26 ist ebenfalls mit der Steuereinheit 22 des mobilen Endgeräts 14 datentechnisch verbunden.

Sollte der Benutzer des ersten mobilen Endgeräts 14 dieses einmal verloren haben oder sollte dieses widerrechtlich entwendet worden sein, so besteht die Möglichkeit, mit einem in Fig. 1 nicht dargestellten dritten mobilen Endgerät, welches das erste mobile Endgerät 14 ersetzt, eine erneute Interaktion mit dem Aktivierungsmittel durchzuführen. Die Interaktion von dem dritten mobilen Endgerät mit dem Aktivierungsmittel bewirkt eine Neuvergabe von Administrationsrechten an das dritte mobile Endgerät, wodurch früher vergebene Administrationsrechte und/oder an andere Endgeräte vergebene Berechtigungen zur Betätigung des Schlosses 10 wieder entzogen werden können.

Nachfolgend wird der Ablauf des Verfahrens zur Kopplung eines mobilen Endgeräts 14 mit dem mobilen Schloss 10 beschrieben.

Das Verfahren beginnt, indem ein elektrisch betätigbares mobiles Schloss 10 zusammen mit einem Aktivierungsmittel 12 bereitgestellt wird, wobei das Aktivierungsmittel 12 einen dem Schloss 10 zugeordneten virtuellen Schlüssel umfasst. Bei einer Interaktion eines mobilen Endgeräts 14 mit dem Aktivierungsmittel 12 wird ein virtueller Schlüssel auf das mobile Endgerät 14 übertragen. Anschließend wird zwischen dem mobilen Endgerät 14 und dem Schloss 10 unter Verwendung des virtuellen Schlüssels eine verschlüsselte Datenverbindung aufgebaut. Dabei wird der von einem mobilen Endgerät 14 gespeicherte virtuelle Schlüssel mit dem in dem Speicher 24 des Schlosses 10 abgespeicherten Abbild des virtuellen Schlüssels verglichen. Stimmen der virtuelle Schlüssel des mobilen Endgeräts 14 und das in dem Speicher 24 des Schlosses 10 abgespeicherte Abbild des virtuellen Schlüssels überein, so werden das mobile Endgerät 14 und das Schloss 10 gekoppelt und infolgedessen das mobile Endgerät 14 zur Betätigung des Schlosses 10 berechtigt.

Damit das Schloss 10 nur zur Betätigung desselben berechtigte mobile Endgeräte 14 erkennt, wird bei einer Übereinstimmung der beiden virtuellen Schlüssel der das mobile Endgerät 14 identifizierende Identifikator in den Speicher 24 des Schlosses 10 aufgenommen. Somit kann das Schloss 10 bei Erkennen des mobilen Endgeräts 14 anhand des dem mobilen Endgerät 14 zugeordneten Identifikators auf eine Betätigungsanfrage des mobilen Endgeräts 14 durch einen Öffnungs- oder Schließvorgang entsprechend reagieren.

### Bezugszeichenliste

- 10: Schloss
- 12: Aktivierungsmittel
- 14: mobiles Endgerät
- 16: optische Einheit
- 18: Speicher
- 20: Sende/Empfangseinheit
- 22: Steuereinheit
- 24: Speicher
- 26: Anzeigeeinheit

- A: Pfeil
- B: Pfeil

## Patentansprüche

1. Schließsystem mit einem elektrisch betätigbaren mobilen Schloss (10) und einem Aktivierungsmittel (12), welches einen dem Schloss (10) zugeordneten virtuellen Schlüssel umfasst und welches dazu dient, bei einer Interaktion mit einem ersten mobilen Endgerät (14), den virtuellen Schlüssel auf das erste mobile Endgerät (14) zu übertragen und in diesem zu speichern, wobei der virtuelle Schlüssel dazu dient, eine verschlüsselte Datenkommunikationsverbindung zwischen dem ersten mobilen Endgerät (14) und dem Schloss (10) aufzubauen, um das erste mobile Endgerät (14) mit dem Schloss (10) zu koppeln und dadurch das erste mobile Endgerät (14) zur Betätigung des Schlosses (10) zu berechtigen.

2. Schließsystem nach Anspruch 1,
**dadurch gekennzeichnet, dass**
die Interaktion, insbesondere die erstmalige Interaktion, des ersten mobilen Endgeräts (14) mit dem Aktivierungsmittel (12) eine Vergabe von Administrationsrechten an das erste mobile Endgerät (14) bewirkt.

3. Schließsystem nach Anspruch 2,
**dadurch gekennzeichnet, dass**
die Administrationsrechte zur Übertragung des in dem ersten mobilen Endgerät (14) gespeicherten virtuellen Schlüssels an ein zweites mobiles Endgerät berechtigen.

4. Schließsystem nach Anspruch 3,
**dadurch gekennzeichnet, dass**
der virtuelle Schlüssel nach einer Übertragung an das zweite mobile Endgerät den Aufbau einer verschlüsselten Datenkommunikationsverbindung zwischen dem zweiten mobilen Endgerät und dem Schloss (10) ermöglicht, um das zweite mobile Endgerät mit dem Schloss (10) zu koppeln und das zweite mobile Endgerät zur Betätigung des Schlosses (10) zu berechtigen.

5. Schließsystem nach zumindest einem der Ansprüche 2 bis 4,
**dadurch gekennzeichnet, dass**
eine erneute Interaktion eines dritten mobilen Endgeräts mit dem Aktivierungsmittel eine Neuvergabe von Administrationsrechten an das dritte mobile Endgerät bewirkt.

6. Schließsystem nach Anspruch 5,
**dadurch gekennzeichnet, dass**
die neu vergebenen Administrationsrechte dazu berechtigen, früher vergebene Administrationsrechte und/oder an ein zweites mobiles Endgerät vergebene Berechtigungen zur Betätigung des mobilen Schlosses (10) zu entziehen.

7. Schließsystem nach zumindest einem der vorstehenden Ansprüche, **dadurch gekennzeichnet, dass**
das Schloss (10) einen Speicher (24) umfasst, in welchem ein Abbild des virtuellen Schlüssels abgespeichert ist und/oder in welchem ein dem oder jedem mobilen Endgerät (14) jeweils zugeordneter Identifikator abgespeichert ist und/oder in welchem abgespeichert ist, welches mobile Endgerät (14) über Administrationsrechte verfügt.

8. Schließsystem nach Anspruch 2 und 7,
**dadurch gekennzeichnet, dass**
die Administrationsrechte das Auslesen des Speichers (24) des Schlosses (10) umfassen.

9. Schließsystem nach zumindest einem der vorstehenden Ansprüche,
**dadurch gekennzeichnet, dass**
das Aktivierungsmittel (12) einen Code umfasst.

10. Schließsystem nach zumindest einem der vorstehenden Ansprüche,
**dadurch gekennzeichnet, dass**
die Interaktion des mobilen Endgeräts (14) mit dem Aktivierungsmittel (12) mittels einer an dem mobilen Endgerät (14) vorgesehenen optischen Einheit (16), insbesondere einer Kamera, erfolgt.

11. Verfahren zur Kopplung eines mobilen Endgeräts (14) mit einem elektrisch betätigbaren mobilen Schloss (10) zum Zweck der Betätigung des Schlosses (10) mittels des mobilen Endgeräts (14), die folgenden Schritte umfassend:
- Bereitstellen eines elektrisch betätigbaren mobilen Schlosses (10) zusammen mit einem Aktivierungsmittel (12), welches einen dem Schloss (10) zugeordneten virtuellen Schlüssel umfasst;
- Übertragen des virtuellen Schlüssels auf das mobile Endgerät (14) und Speichern des virtuellen Schlüssels in dem mobilen Endgerät (14) infolge einer Interaktion des mobilen Endgeräts (14) mit dem Aktivierungsmittel (12);
- Aufbauen einer verschlüsselten Datenkommunikation zwischen dem mobilen Endgerät (14) und dem Schloss (10) unter Verwendung des virtuellen Schlüssels; und
- Koppeln des mobilen Endgeräts (14) mit dem Schloss (10) und dadurch Berechtigen des mobilen Endgeräts (14) zur Betätigung des Schlosses (10).

12. Verfahren nach Anspruch 11,
**dadurch gekennzeichnet, dass**
das Verfahren außerdem die Schritte umfasst:
- Vergleichen des in dem mobilen Endgerät (14) gespeicherten virtuellen Schlüssels mit einem in einem Speicher (24) des Schlosses (10) abgespeicherten Abbild des virtuellen Schlüssels; und
- Aufnahme eines das mobile Endgerät (14) identifizierenden Identifikators in den Speicher (24) des Schlosses (10) bei einer Übereinstimmung des dem mobilen Endgerät (14) zugordneten virtuellen Schlüssels und des in dem Speicher (24) abgespeicherten Abbildes des virtuellen Schlüssels.
